# EUROPEAN PATENT SPECIFICATION

(11) **EP 2 863 614 B1**
(45) Date of publication and mention of the grant of the patent: **14.12.2016**
(21) Application number: 14187391.9
(22) Date of filing: 01.10.2014
(51) Int. Cl.: H04L 29/08, H04L 12/715, H04L 12/723

(54) **Method and apparatus for a named data network within an autonomous system**
Verfahren und Vorrichtung für ein namensbasiertes Netzwerk in einem autonomen System
Procédé et appareil pour un réseau des données identifiées à l'intérieur d'un système autonome

(30) Priority: 18.10.2013 US 201314058076
(43) Date of publication of application: 22.04.2015
(73) Proprietor: Palo Alto Research Center Incorporated, Palo Alto, California 94304 (US)
(72) Inventor: MOSKO, Marc E., Santa Cruz, CA 95060 (US)
(74) Representative: Gill Jennings & Every LLP

(56) References cited:
- EP-A1- 2 214 357
- US-A1- 2003 099 237

## Description

### BACKGROUND

### Field

This disclosure is generally related to content centric networks (CCNs). More specifically, this disclosure is related to distributing CCN resources across various nodes of an autonomous system.

### Related Art

The world's various Internet services are typically organized into Autonomous Systems (AS) that comprise various types of network devices. These network devices are oftentimes trusted devices, and each device type performs a specific set of operations for the network. For example, an Internet service provider (ISP) can provide Internet service to clients across a wide geographic area by deploying a plurality of routers, gateway devices, domain-name servers, and application servers.

Content-centric networks, on the other hand, include various different types of devices that function as stand-alone network nodes. Some CCN devices may be content producers (e.g., an image sensor, or a storage server), transport devices (e.g., routers, personal computers), or data consumers (e.g., a smartphone). For example, a typical CCN node is capable of processing interests by performing lookup operations on a pending interest table (PIT), a forwarding information base (FIB), and a CCN content store (CS). If the network node cannot satisfy the interest locally, the CCN node forwards the interest to a remote CCN node that itself will utilize a local PIT, FIB, and CCN data repository to process the interest. Once the interest flows to a CCN node that can satisfy the interest, this CCN node will return a content object that satisfies the interest to an interface from which it received the interest. The content object will follow the network path traversed by the interest in the reverse direction toward the CCN node that generated the interest.

If two CCN devices are deployed across different computer networks, interests and content objects would only flow between these two CCN devices if their ISP have deployed a CCN-compatible AS. Unfortunately, deploying typical CCN devices across an AS to implement a CCN-compatible AS can result in an undesirable amount of redundant resources across the various AS devices, as each CCN device comprises a local PIT, FIB, and CS.

US 2003/099237 A1 provides content-based routing architecture for global content networking. A virtual overlay network called the "virtual content network" is superimposed over a physical network. The content network contains content routers as the nodes and "pathways" as links. The content-based routers at the edge of the content network may be either a gateway to the client domain or a gateway to the server domain whereas the interior ones correspond to the content switches dedicated for steering content requests and replies. The pathways are virtual paths along the physical network that connect the corresponding content routers. Content requests are tagged at the ingress points. The tags are designed to incorporate several different attributes of the content in the routing process. The path chosen for routing the request is the optimal path and is chosen from multiple paths leading to the replicas of the content.

EP 2214357 A1 provides a system that facilitates forwarding a packet. During operation, the system receives a packet with a hierarchically structured variable-length identifier (HSVLI). The system then performs a lookup at a forwarding engine based at least on the packets HSVLI. The system further makes a forwarding decision based on the lookup.

### SUMMARY

A computer-implemented method for processing an interest at a network node of a content-centric network autonomous system is provided. During operation, the system can, by a network node, receive an interest for a content object, said interest having a structural name, and determines whether the local network node can satisfy the interest. If the local network node does not satisfy the interest, the system determines a label indicating network information for a remote network node. While determining the label, the system performs a lookup operation on a cache-server routing table (CSRT), using the interest's structured name, to obtain a label for a cache server assigned to the interest's structured name. The system then attaches the label to the interest, and forwards the interest to the remote network node based on the label.

In some embodiments, the label includes a multiprotocol label switching (MPLS) label which indicates a virtual link to the remote network node.

In some embodiments, the network node corresponds to an edge server of the autonomous system, and the system can perform a lookup in a pending interest table (PIT) to determine whether an entry exists in the PIT for the interest. Then, responsive to determining that an entry does not exist in the PIT for the interest, the system adds an entry in the PIT that maps a prefix of the received interest to at least one label obtained from the received interest.

In some embodiments, the system can receive a content object that satisfies the interest. Responsive to receiving the content object, the system can perform a lookup in the PIT, based on the content object's structured name, to obtain one or more labels for network nodes that are to receive the content object. The system then forwards the content object to each network node identified by the obtained labels.

In some embodiments, while performing the lookup operation in the PIT, the system performs a longest-matching prefix lookup between a structured name of the received interest and a name prefix of a PIT entry to identify a PIT entry with a longest matching prefix to the interest's structured name.

### [Cancelled]

In some embodiments, while performing the lookup operation in the CSRT, the system performs a longest-matching prefix lookup between the interest's structured name and a name prefix of a CSRT entry to identify a CSRT entry with a longest matching prefix to the interest's structured name.

In some embodiments, the local network node corresponds to an egress edge server of the autonomous system, and the system determines the label by obtaining the label from the interest, and wherein the label indicates a virtual port of the egress edge server for forwarding the interest to a remote autonomous system.

In some embodiments, the network node corresponds to a cache server. Also, if the system determines that the cache server does not store the content object, the system can perform a lookup operation on a route-server routing table (RSRT) to obtain the label that corresponds to a route server assigned to the interest's structured name.

In some embodiments, while performing the lookup operation in the RSRT, the system performing a longest-matching prefix lookup between the interest's structured name and a name prefix of a RSRT entry to identify a RSRT entry with a longest matching prefix to the interest's structured name.

In some embodiments, the network node corresponds to a cache server. Also, when the system receives the content object that satisfies the interest, the system can forward the content object to one or more of: a predetermined ingress edge server; and a predetermined cache server associated with the ingress edge server.

One embodiment provides a route server of an autonomous system that processes an interest for the autonomous system. During operation, the system can obtain an interest for a content object, and determines a label that corresponds to the interest. The label indicates network information for an egress network node of the local autonomous system, and also indicates a virtual port of the egress network node for disseminating the interest to a remote automated system. The system then attaches the label to the interest, and forwards the interest to the egress network node based on the label. This allows the egress network node to forward the interest to the remote autonomous system based on the attached label.

In some embodiments, the system determines the label by performing a lookup operation on a forwarding information base (FIB) using the interest's structured name as input.

In some embodiments, the label includes a multiprotocol label switching (MPLS) label which indicates a virtual link to the remote network node.

In some embodiments, if the system determines that the interest's structured name is not a globally routable name, the system generates a globally routable structured name for the interest, and attaches the globally routable structured name to the interest.

In some variations to these embodiments, while generating the globally routable name, the system determines a globally-routable prefix for the interest, and appends the interest's structured name to the globally-routable prefix.

### BRIEF DESCRIPTION OF THE FIGURES

FIG. 1 illustrates an exemplary autonomous system that facilitates distributing various interest-processing tasks across a plurality of computing devices of an autonomous system in accordance with an embodiment.
FIG. 2 illustrates exemplary communications between network devices of a CCN autonomous system in accordance with an embodiment.
FIG. 3 presents a flow chart illustrating a method for processing an interest at an edge server or a cache server of an autonomous system in accordance with an embodiment.
FIG. 4 presents a flow chart illustrating a method for managing a pending interest table (PIT) at an edge server of an autonomous system in accordance with an embodiment.
FIG. 5 presents a flow chart illustrating a method for forwarding an interest at an edge server of an autonomous system in accordance with an embodiment.
FIG. 6 presents a flow chart illustrating a method for receiving and processing a content object at an edge server of an autonomous system in accordance with an embodiment.
FIG. 7 presents a flow chart illustrating a method for processing an interest at a cache server of an autonomous system in accordance with an embodiment.
FIG. 8 presents a flow chart illustrating a method for receiving and processing a content object at a cache server of an autonomous system in accordance with an embodiment.
FIG. 9 presents a flow chart illustrating a method for processing an interest at a route server of an autonomous system in accordance with an embodiment.
FIG. 10 presents a flow chart illustrating a method for generating a globally routable name for an interest in accordance with an embodiment.
FIG. 11 illustrates an exemplary apparatus that facilitates distributing various interest-processing tasks across a plurality of computing devices of an autonomous system in accordance with an embodiment.
FIG. 12 illustrates an exemplary computer system that facilitates distributing various interest-processing tasks across a plurality of computing devices of an autonomous system in accordance with an embodiment.

In the figures, like reference numerals refer to the same figure elements.

### DETAILED DESCRIPTION

The following description is presented to enable any person skilled in the art to make and use the embodiments, and is provided in the context of a particular application and its requirements.

### Overview

Embodiments of the present invention provide a content-centric network (CCN) autonomous system (AS), which solves the problem of distributing various CCN processing tasks and resources across a plurality of computing devices. Specifically, the CCN AS can include a set of edge servers, cache servers, and routing servers that can use label switching (e.g., Multiprotocol Label Switching, or MPLS) to control the flow of interests and content objects within the AS.

The edge servers interface with external systems to process interests for content objects, and also maintain a pending interest table (PIT) to keep track of pending interests. The cache servers include a repository for caching content objects that are likely to be requested in the near future. A cache server can satisfy an interest by returning a corresponding content object directly to an AS node that has attached a label to the interest. The route servers, on the other hand, are optimized to perform fast lookup operations on a forwarding information base (FIB) to determine an outgoing "face" of the CCN AS to use to forward an interest to a remote system. The CCN "face" implements a virtual interface for the CCN AS, such that multiple device interfaces can handle data traffic for the CCN face. When an egress edge server of the CCN AS receives a content object that satisfies an interest, the egress edge server can forward the content object toward a corresponding ingress edge server, while bypassing the route servers.

In contrast, a typical CCN device can include a content store (CS), a FIB, as well as a PIT. Hence, an autonomous system that is realized using typical CCN devices would need to duplicate the full set of CCN tasks across all network nodes, which would make it difficult to scale the AS to process a larger throughput of interests, or to satisfy a larger range of structured names.

For example, in a typical CCN device, the FIB needs to be updated periodically, such as when the CCN device receives advertisements for new content. The CCN device uses the FIB to determine an interface that can be used to forward an interest to another network node. Hence, an AS that is implemented using typical CCN nodes would require all AS nodes to include a FIB to determine how to forward an interest toward an egress node of the AS. However, in embodiments of the present invention, not every CCN AS node needs to maintain a FIB. Some CCN AS nodes can be configured to determine how to forward an interest to a network outside the CCN AS (using a FIB), while other CCN AS nodes can be configured to process an interest internally (e.g., a cache server). Hence, CCN AS nodes that are not configured to route an interest to a remote system do not need to maintain or access a FIB.

Further, in a typical CCN device, the PIT needs to be updated at a high rate, such as when a new interest is received or when an old interest is satisfied. The PIT stores entries for interests that are to be matched against incoming content objects, and each entry is only removed when a match is made, or when an interest times out. In some cases, the timeout period can be relatively large, in the order of a few seconds. This can cause the CCN node to turn over several gigabytes of data in the PIT every few seconds, such as to add entries for new interests and to remove entries interests that have been satisfied or have expired. Hence, the PIT typically needs to be updated at twice the data throughput of the CCN device and can grow substantially large, which makes it impractical for an AS to maintain a PIT at every network node. In embodiments of the present invention, the CCN AS uses edge nodes to maintain a PIT for the AS, thereby relieving other types of CCN AS nodes of having to maintain a PIT.

In some embodiments, the distributed nature of the CCN AS system facilitates a system administrator to scale the CCN AS's performance. For example, as the number of client devices that disseminate interests increases, the system administrator can add additional edge servers to the CCN AS to increase the number of interests that the CCN AS can process. Further, the system administrator can also add additional cache servers to the CCN AS to improve the cache hit rate within the CCN AS. As another example, the system administrator can configure the CCN AS to handle a larger number of CCN routable prefixes by adding additional route servers to the CCN AS.

### Exemplary CCN Autonomous System

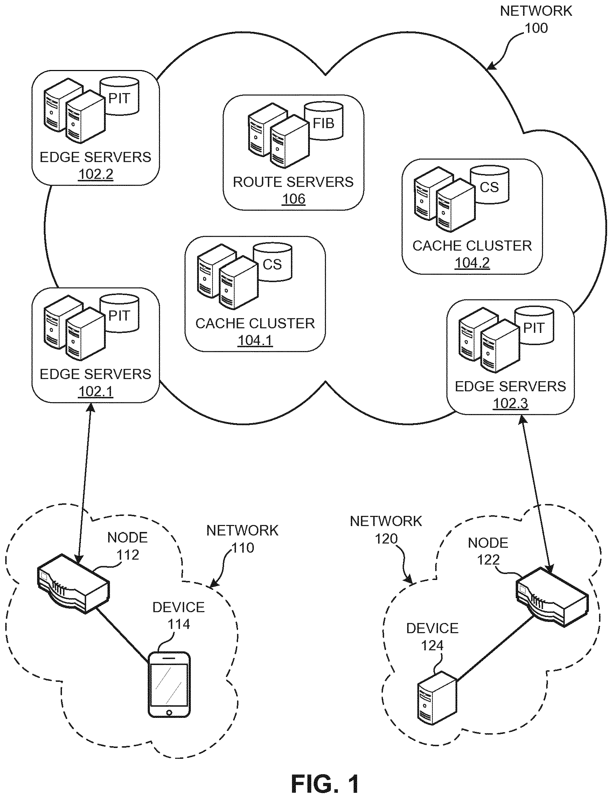

FIG. 1 illustrates an exemplary autonomous system 100 that facilitates distributing various interest-processing tasks across a plurality of computing devices of an autonomous system in accordance with an embodiment. Specifically, AS 100 can include a set of edge servers 102, one or more clusters of cache clusters 104, and a set of route servers 106. Each set of edge servers (e.g., edge servers 102.1) can correspond to a CCN face of AS 100, and can include or be coupled to a storage device that stores a PIT for the face. Also, each set of route servers can be coupled to or include a storage device that stores a FIB for AS 100.

In some embodiments, each cache cluster can correspond to one or more clusters of edge servers, and can include or be coupled to a storage device that implements a content store (CS) to cache content objects for the edge servers. Cache cluster 104.1, for example, can correspond to edge servers 102.1 and 102.2, and cache cluster 104.2 can correspond to edge servers 102.3. Also, the AS servers can be distributed over a large geographic area, such as to deploy large server clusters near heavily populated locations.

Edge servers 102.1, for example, can provide a face to DSL subscribers, and edge servers 102.2 can provide a face to corporate Internet subscribers, such that each individual edge server may provide Internet service to a certain geographic region. Edge servers 102.3 can provide a back-haul face to another AS, such as to one or more other Internet service providers.

Cache servers 104 can also be distributed over a geographic area, so that each individual cache server can host a content store for one or more edge servers. Cache servers 104.1, for example, can cache content objects for edge servers 102.1 and 102.2, and cache servers 104.2 can cache content objects for edge servers 102.3.

In some embodiments, servers 102, 104, and 106 can establish network paths within AS 100 by generating labels (e.g., MPLS labels) and attaching these labels to data objects. Routing nodes in AS 100 can be MPLS routers, which use label switching to move data around AS 100 based on the labels attached to the data objects. For example, the labels can establish network paths between edge servers 102 and cache clusters 104. An edge server 102.1 can generate a label that indicates cache cluster 104.1, which AS 100 can use to forward an interest to cache servers 104.1. Edge servers 102.3 can also use this label to return the corresponding content object to cache cluster 104.1.

As another example, the labels can establish network paths between route servers 106 and edge servers 102 or cache servers 104, which allows router servers 106 to propagate an interest through AS 100 toward an egress edge server. In some embodiments, route servers 106 can perform a lookup operation on a FIB to obtain a label for a CCN face, which indicates a virtual link to a remote AS. The label can indicate at least: a target device of AS 100 associated with the virtual link; a target interface of the device; and a virtual port that corresponds to a device at a remote AS. A route server of AS 100 can use the label to forward an interest toward a port of an egress node of AS 100, which the egress edge server uses to forward the interest to the remote AS.

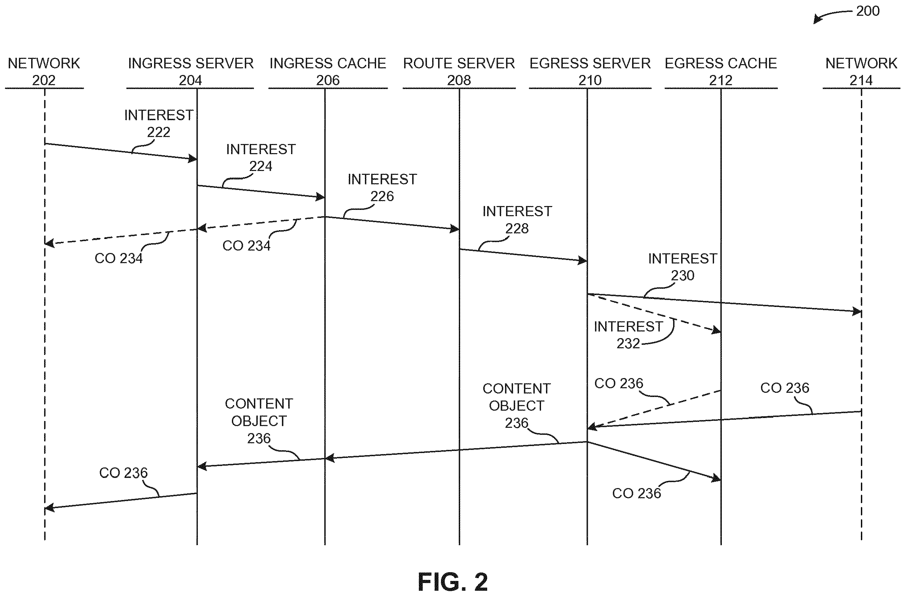

FIG. 2 illustrates exemplary communications 200 between network devices of a CCN autonomous system in accordance with an embodiment. During operation, an interest can arrive at an ingress server 204 from a network 202. Ingress edge server 204 can have a small local cache, which ingress server 204 can use to determine whether a content object that satisfies the interest is stored locally. If so, ingress server 204 can return the content object through an incoming "face" from which the interest was received.

Ingress server 204 can also perform a "similar match" against entries in a PIT to determine whether a similar interest has been requested recently. If a similar interest is currently pending, ingress server 204 modifies the PIT entry for the similar interest to add "face" information for interest 222. Otherwise, ingress server 204 can generate an interest 224 by adding a label for ingress cache 206 to interest 222, and forwarding interest 224 to ingress cache 206.

In some embodiments, ingress server 204 can determine a label for a closest ingress cache 206 by performing a lookup operation on a cache server routing table (CSRT) that takes a CCN name prefix as input. The closest ingress cache can be determined based on a number of network hops, network latency, or any other distance metric now known or later developed. Ingress server 204 uses this label to forward interest 224 to ingress cache 206.

Ingress cache 206 can include or be coupled to a content store (CS) which caches content objects for a plurality of edge servers. Ingress cache 206 performs a predicate match against the CS to determine whether a content object in the CS can satisfy interest 224. Performing the predicate match can involve processing a set of rules that need to be satisfied for a match to occur. A rule can indicate, for example, comparison operations for min suffix components, max suffix components, exclude patterns, publisher public key ID, etc. In some embodiments, a cache server can avoid performing a predicate match to achieve faster processing, for example, by performing an exact match on the interest's structured name, or by performing an exact match on a fixed-length identifier derived from the interest's structured name.

If ingress cache 206 stores a content object 234 that satisfies interest 224, ingress cache 206 can return a packet that incudes content object 234 to ingress server 204. Ingress server 204 then unbundles the packet to obtain content object 234, identifies a PIT entry that corresponds to content object 234 to obtain a label, and sends content object 234 to a corresponding face from which ingress server 202 received interest 212.

Otherwise, if ingress cache 206 does not store a content object that satisfies interest 224, ingress cache 206 forwards interest 224 to a route server 208. For example, ingress cache 206 can generate an interest 226 by appending a label that identifies route server 208 to interest 224, and forwards interest 226 to route server 208 using label switching.

In some embodiments, ingress cache 206 determines which route server is to receive interest 226 by performing a lookup operation on a route server routing table (RSRT) that takes a structured name as input to determine a label for the route server (e.g., route server 208). In some embodiments, the system performs the lookup operation on the RSRT by searching for an RSRT entry that has a longest prefix match to the structured name from interest 224.

Router server 208 performs a lookup in a FIB, based on the structured name from interest 226, to determine a label for an egress device of the AS that is to forward the interest outside the AS. Route server 208 then generates interest 228 by appending the label to interest 226, and forwards interest 228 toward egress server 210 using the label obtained from the FIB.

Egress server 210 performs a lookup operation in a local PIT to determine whether an entry exists for interest 228. If an entry exists, this entry can include labels for each ingress edge server and each ingress cache server that forwarded the interest toward the egress server. Egress server 210 can update this PIT entry to add the labels from interest 228.

If an entry does not exist for interest 228, egress server 210 obtains one or more labels that have been attached to interest 228, and creates a PIT entry for interest 228 that includes these labels. Egress server 210 also extracts the initial interest from interest 228 to generate an interest 230 that does not include the attached labels, and forwards interest 230 out the egress port identified by the label obtained from the FIB at route server 208. Interest 230 may be forwarded across a computer network 214 to reach a computing device that can satisfy interest 230. Egress server 210 can also perform a lookup operation on a CSRT to obtain a label for a cache server (e.g., egress cache 212), and forwards interest 220 to egress cache 210 using the label from the CSRT.

If egress server 210 receives a content object 236 that satisfies interest 228 (e.g., from network 214 or egress cache 212), egress server 210 can search through the local PIT to obtain one or more labels that have been stored in association with interest 228. Egress server then forwards content object 236 to each computing device of the AS that is identified by a label. For example, the PIT may include an entry for interest 236 that identifies ingress server 204, as well as ingress cache 206. Hence, after performing a lookup through the PIT, egress server 210 can forward content object 236 to both ingress server 204 and ingress cache 204, based on the labels obtained from the PIT. For example, egress server 210 can forward content object 236 by generating a packet that includes labels for both ingress server 204 and ingress cache 206, and forwarding the packet to ingress server 204 and ingress cache 206 using label switching.

In some embodiments, egress server 210 can add a label for egress cache 212 for each received interest, which causes egress server 210 to forward content objects received via network 214 to egress cache 212. Hence, when egress server 210 receives content object 236 that satisfies interest 230, egress server 210 can automatically cache content object 236 by forwarding content object 236 to egress cache 212.

In some embodiments, if egress cache 210 can satisfy interest 230 (e.g., by obtaining content object 236 from a local content store), egress cache 210 can obtain a predetermined label for ingress cache 206, and sends content object 236 to ingress cache 206 using this label. Ingress cache 206 then stores content object 236 in a local content store, and sends content object 236 to ingress server 204. In some variations, egress cache 210 can send content object 236 to ingress server 204, which forwards content object 236 to ingress cache 206. Note that neither egress server 210 nor egress cache 212 needs to forward a content object to route server 208.

Once ingress server 204 receives content object 236, ingress server 204 performs a lookup operation on the local PIT to determine a face from which it received interest 222, unbundles the packet to obtain content object 236, and forwards content object 236 through the corresponding face.

### Edge Servers and Cache Servers

In some embodiments, an autonomous system can process an interest at an edge server or at a cache server. An edge server can receive the interest from a remote system and/or can forward the interest to a remote system. For example, the edge server can include a small cache to store a small number of popular content objects, and can forward the interest to a remote device if the cache does not include a content object that satisfies the interest.

A cache server, on the other hand, can include a large data repository to store a significantly larger number of content objects that are likely to be requested in the near future. The cache server can function as an intermediary node within the AS that facilitates satisfying the interest internally within the AS, and complements one or more edge servers. If the AS requires a larger data cache to scale the AS's performance to a growing number of incoming interests, a system administrator can add additional cache servers to increase the number of content objects that can be cached, without having to increase the cache at an edge server.

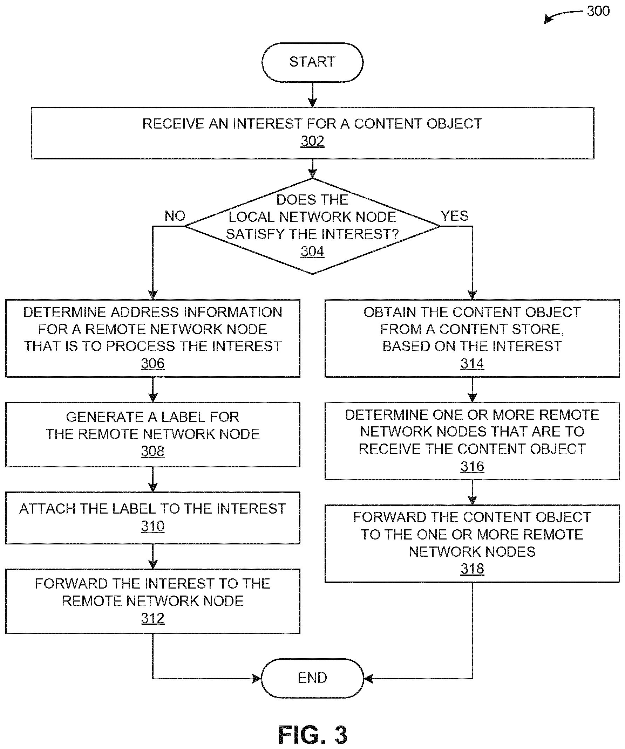

FIG. 3 presents a flow chart illustrating a method 300 for processing an interest at an edge server or a cache server of an autonomous system in accordance with an embodiment. During operation, the system can receive an interest for a content object (operation 302), and determines whether the local network node can satisfy the interest (operation 304).

If the system cannot satisfy the interest, the system determines address information for a remote network node that is to process the interest (operation 306), and generates a label for the remote network node (operation 308). The system then attaches the label to the interest (operation 310), and forwards the interest to the remote network node using label switching (operation 312). The remote network node can include a cache server, a route server, or an egress server of the CCN AS, and the address information can include a binary identifier for the remote network node (e.g., a binary prefix) or a network address for the remote network node (e.g., an internet protocol (IP) address). In some embodiments, if the local node is an egress server, the remote node can include a network node of a remote autonomous system.

If the system can satisfy the interest, the system obtains the content object from a content store based on the interest (operation 314). The system also determines one or more remote network nodes that are to receive the content object (operation 316), and forwards the content object to the one or more remote network nodes, for example, using label switching (operation 318).

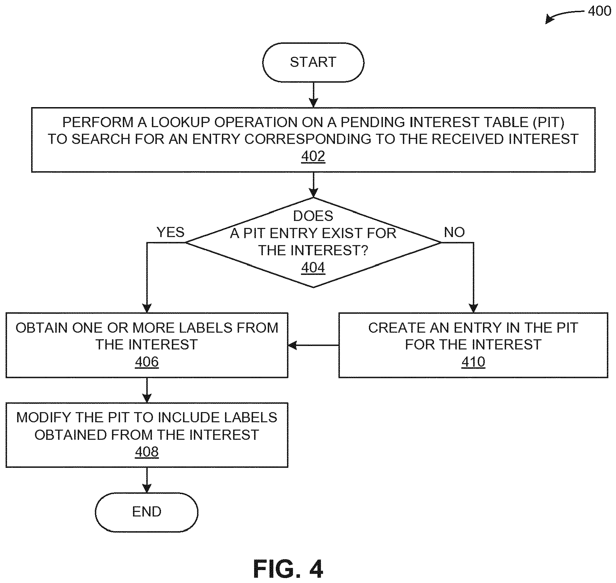

FIG. 4 presents a flow chart illustrating a method 400 for managing a pending interest table (PIT) at an egress edge server of an autonomous system in accordance with an embodiment. During operation, the system performs a lookup operation on a PIT to search for an entry corresponding to the received interest (operation 402). The system then determines whether a PIT entry exists for the interest (operation 404). If so, the system obtains one or more labels from the interest (operation 406), and modifies the PIT to include labels obtained from the interest (operation 408). These labels include labels for network nodes that have forwarded the interest to the edge server, but do not include a label for the edge server itself. In some embodiments, during operation 408, the system can also add a label for a cache server to the PIT entry.

However, if the PIT does not include an entry for the interest, the system creates an entry for the interest (operation 410), and returns to operation 406 to insert labels from the interest into the PIT entry.

### Edge Servers

In some embodiments, when an edge server receives an interest, the edge server searches for a closest cache server that can satisfy the interest, for example, by performing a longest-matching prefix lookup operation on a cache-server routing table (CSRT). The edge server also adds the cache server's MPLS label to an interest, which can be used by the AS routers to forward the interest to the cache server. Other nodes of the CCN AS can also use the label to return a content object directly to the cache server without requiring the content object to pass through a CCN route server.

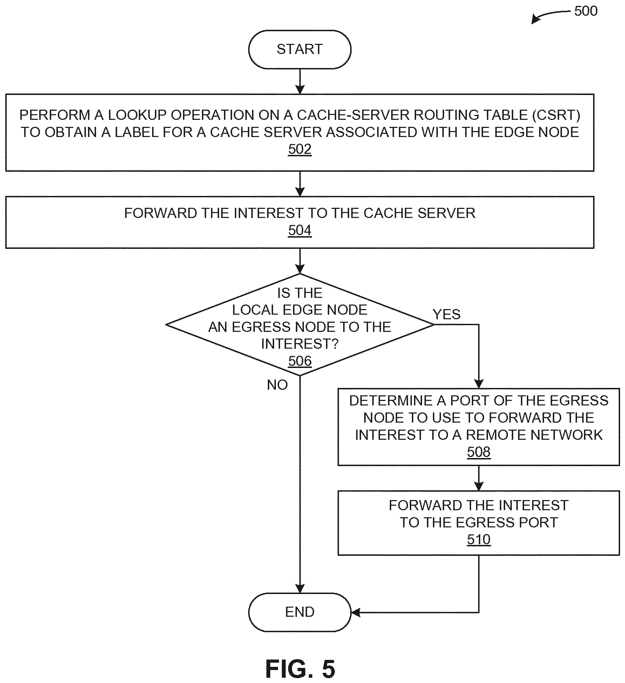

FIG. 5 presents a flow chart illustrating a method 500 for forwarding an interest at an edge server of an autonomous system in accordance with an embodiment. During operation, the system can perform a lookup operation on a CSRT to obtain a label for a cache server associated with the edge node (operation 502). For example, the system can perform the lookup on the CSRT by comparing a binary prefix to determine a cache server that is to process the interest. The system then forwards the interest to the cache server using label switching (operation 504), for example, by adding the cache server's MPLS label to the interest, and forwarding the interest to the cache server.

In some embodiments, the system determines whether the local edge node is an ingress node or an egress node to the interest (operation 506). If the local edge node is an egress node to the interest, the system can forward the interest to a remote autonomous system. For example, the system can obtain and analyze a label from the interest to determine a port of the egress node to use to forward the interest to a remote network (operation 508), and forwards the interest to the edge port (operation 510).

After the CCN AS forwards the interest through a face toward a remote AS, the CCN AS can obtain a content object that satisfies the interest via this face. An egress edge server of the AS receives the content object via the face, and processes the content object, for example, to cache the content object and to forward the content object toward an ingress edge server that received the interest.

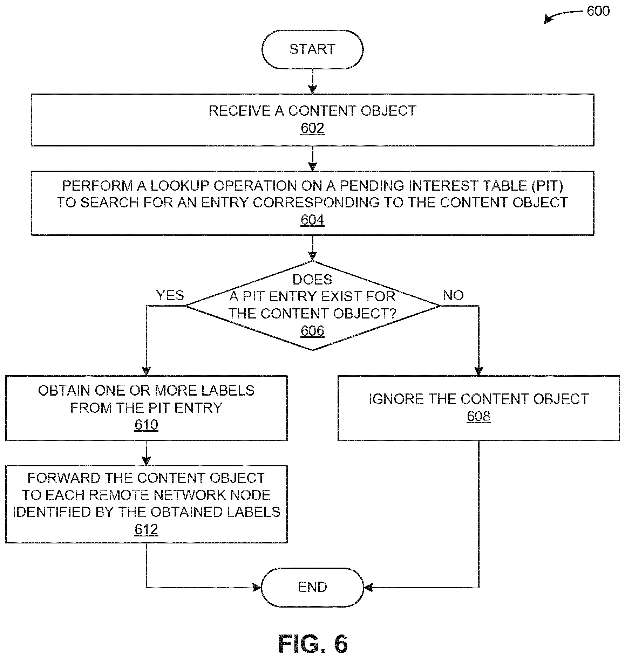

FIG. 6 presents a flow chart illustrating a method 600 for receiving and processing a content object at an edge server of an autonomous system in accordance with an embodiment. During operation, the system can receive a content object (operation 602), and performs a lookup operation on a PIT to search for an entry corresponding to the content object (operation 604). The system then determines whether a PIT entry exists for the content object (operation 606). If a PIT entry does not exist, the system can ignore the content object (operation 608), or can perform any other remedial action.

However, if a PIT entry does exist for the content object, the system can obtain one or more labels from the PIT entry (operation 610). These labels can correspond to, for example, a cache server, an ingress edge server, or a face of the CCN AS. The system then uses label switching on the content object to forward the content object to each remote network node identified by the obtained labels (operation 612). For example, during operation 612, an ingress edge server can add, to the content object, a label for a target face or server of the CCN AS. The CCN AS can then perform label switching on the content object to forward the content object to the target face or AS server.

In some embodiments, the edge server can include a small repository to cache content objects. Hence, after receiving the content object at operation 602, the system may also determine whether the content object needs to be cached. If so, the system can store the content object in the edge node's cache.

### Cache Servers

In some embodiments, each cache server advertises name prefixes for content objects that are to be cached by the cache server. For example, a cache server for a back-haul edge server can advertise the prefix "/" to ensure that all content objects can be cached at the cache server. On the other hand, a cache server that is only to cache content objects for a given service or for a set of DSL subscribers can advertise name prefixes associated with the intended service or DSL subscribers. Other AS servers can create an entry in a local CSRT that maps the advertised prefix to the cache server's label, which they can use to forward interests and content objects that satisfy the advertised prefix to the cache server.

The CSRT includes entries whose prefixes only need to be specific enough to divide a namespace between a set of cache servers. In some embodiments, the CSRT does not need to be name-aligned (does not need to respect name boundaries), as each CSRT entry does not need to map to complete name elements of a structured name (e.g., "/PARC/" in the name prefix "/PARC/Mosko"). Rather, each CSRT entry may indicate an arbitrary binary prefix, that may or may not indicate a complete name element. For example, the AS may include cache clusters that distributes the namespace "/" across four groups of cache servers. The CSRT can include entries for the binary prefixes "/00," "/01," "/10," or "/11," such that each binary prefix maps to a group of cache servers.

The CSRT is AS-wide, meaning that the CSRT can include entries for any cache server within the AS. In some embodiments, multiple cache servers can advertise the same prefix, for example, to implement redundancy across the AS. If multiple cache servers advertise a given prefix (e.g., "/" or "/01"), the AS server can forward an interest to the closest cache server. The AS server can determine which cache server is closest based on one or more metrics, such as a least number of hops, a lowest round-trip delay, etc.

When the cache server receives an interest, the cache server can either satisfy the interest locally, or can forward the interest to a route server. Also, when the cache server receives a content object, the cache server can cache the content object locally, and can forward the content object to one or more predetermined AS nodes.

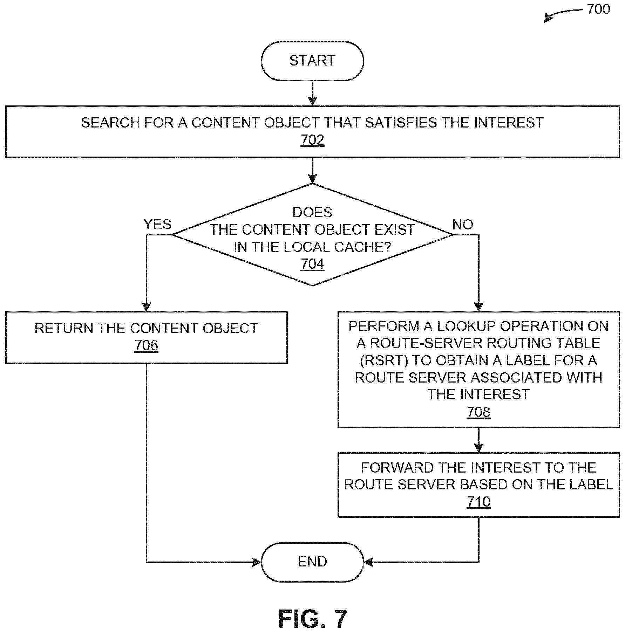

FIG. 7 presents a flow chart illustrating a method 700 for processing an interest at a cache server of an autonomous system in accordance with an embodiment. During operation, the system searches for a content object that satisfies the interest (operation 702), and determines whether the content object exists at the local cache (operation 704). If so, the system returns the content object (operation 706).

However, if the content object does not exist at the local cache, the system can perform a lookup operation on a route-server routing table (RSRT) to obtain a label for a route server associated with the interest (operation 708). The system then uses label switching to forward the interest to the route server (operation 710). For example, the system can perform a longest-matching prefix lookup on the RSRT by comparing a binary prefix to determine a route server that is to process the interest. The system adds the route server's MPLS label to the interest, and performs label switching on the interest to forward the interest to the route server.

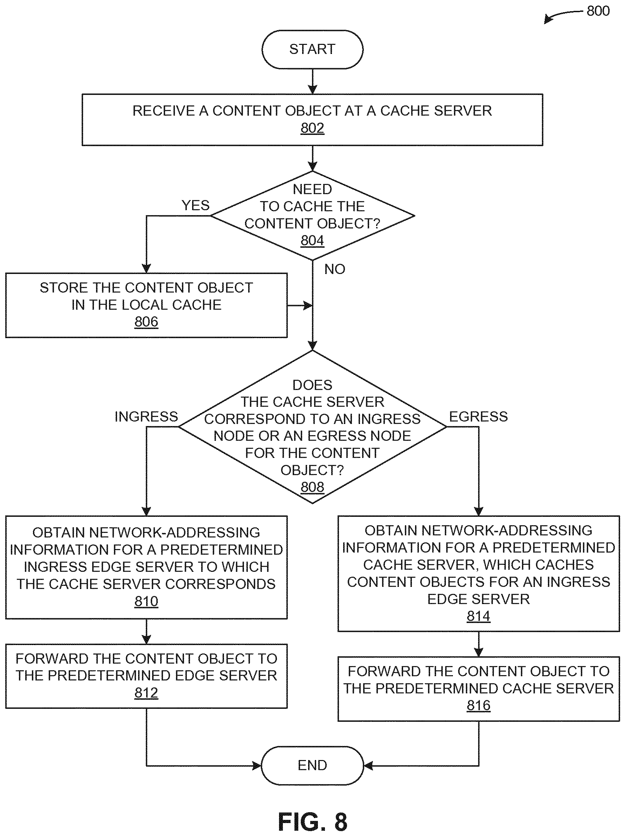

FIG. 8 presents a flow chart illustrating a method 800 for receiving and processing a content object at a cache server of an autonomous system in accordance with an embodiment. During operation, the system can receive a content object at the cache server (operation 802), and determines whether to cache the content object (operation 804). If so, the system stores the content object in the local cache (operation 806). The system may cache the content object, for example, if the content object does not already exist in the cache, and if the content object does not belong to a black-listed set of content objects (e.g., as determined by the content object's structured name, or any other attributes of the content object). The system may also decide to cache the content object if it belongs to a whitelisted set of content objects, such as content objects that belong to a predetermined name prefix.

The system can then determine whether the cache server is associated with an ingress node or an egress node for the content object (operation 808). For example, the cache server is assigned to one or more edge nodes of the autonomous system that can receive interests, and/or that can receive content objects that satisfy an interest. The cache server is associated with an egress edge node if the corresponding edge node received the content object that satisfies an interest received from an ingress edge node. Further, the cache server is associated with an ingress edge node if the corresponding edge node received an interest that is satisfied by the content object that was received by an egress edge node.

If the cache server is associated with an ingress edge node, the system forwards the content object to its corresponding edge node. For example, the system can obtain network-addressing information for a predetermined ingress edge node to which the cache server corresponds (operation 810), and uses label switching to forward the content object to the predetermined edge server (operation 812).

If the cache server is associated with the egress edge node, the system forwards the content object to a cache server associated with the ingress edge node, without sending the content object to the route server. For example, the system can obtain network-addressing information for a predetermined cache server, which caches content objects for an ingress edge server (operation 814). The system then uses label switching to forward the content object to the predetermined cache server (operation 816).

### Route Servers

In some embodiments, a route server of the CCN AS can communicate with route servers of a remote CCN system using a routing protocol to advertise one or more CCN name prefixes that can be satisfied by the local CCN AS. This routing protocol can be implemented using an Internet Protocol (IP), or using a CCN protocol (e.g., CCN SYNC). The route server can also receive advertisements for CCN name prefixes that can be satisfied by the remote CCN system, and creates entries in a local forwarding information base (FIB) to map the CCN name prefix to a face associated with the remote CCN system.

Each route server can advertise prefixes for one or more namespace that the route server can process. AS servers throughout the AS (e.g., an edge server) can create an entry in a local RSRT that maps the advertised prefix to the route server's label, which they can use to forward interests that fall under the advertised prefix to the route server. The RSRT includes entries whose prefixes only need to be specific enough to divide a namespace between a set of route servers. In some embodiments, the RSRT does not need to be name-aligned (does not need to respect name boundaries), as each RSRT entry does not need to map to complete name elements of a structured name (e.g., "/PARC/" in the name prefix "/PARC/Mosko"). Rather, each RSRT entry may indicate an arbitrary binary prefix, that may or may not indicate a complete name element. For example, the AS may include routing clusters that distributes the namespace "/" across four groups of route servers. The RSRT can include entries for the binary prefixes "/00," "/01," "/10," or "/11," such that each binary prefix maps to a group of route servers.

The RSRT is AS-wide, meaning that the RSRT can include entries for any route server within the AS. In some embodiments, multiple route servers can advertise the same prefix, for example, to implement redundancy across the AS. If multiple route servers advertise a given prefix (e.g., "/" or "/011"), the AS server can forward an interest to the closest route server. The AS server can determine which route server is closest based on one or more metrics, such as a least number of hops, a lowest round-trip delay, etc.

The route server can process an interest by performing a longest-matching prefix lookup operation on the FIB to identify a matching FIB entry that maps the interest's name to a label for an egress network node. The FIB lookup operation is boundary-aligned (respects name boundaries), to identify a label for an egress network node that has explicitly advertised a name prefix that satisfies the structured name. Hence, the boundary-aligned name prefixes in the FIB are likely to be longer, on average, than the binary name prefixes of the CSRT and the RSTR entries that do not need to respect name boundaries.

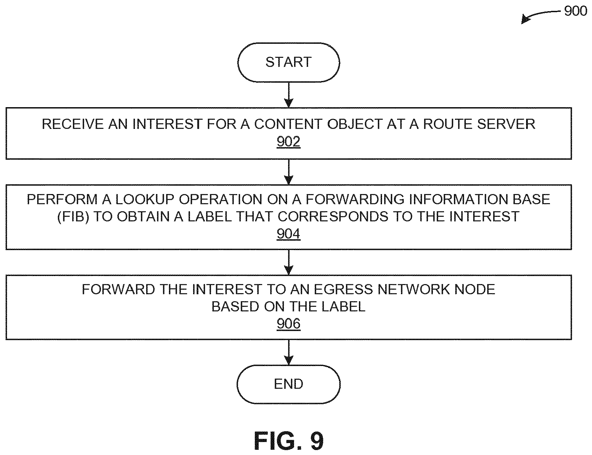

FIG. 9 presents a flow chart illustrating a method 900 for processing an interest at a route server of an autonomous system in accordance with an embodiment. During operation, the system can receive an interest for a content object at the route server (operation 902). To process the interest, the system performs a lookup operation on a forwarding information base (FIB), using the interest's structured name as input, to obtain a label that corresponds to the interest (operation 904). The system then forwards the interest to an egress network node based on the label (operation 906), for example, by adding the label to the interest, and performing label switching on the interest to forward the interest.

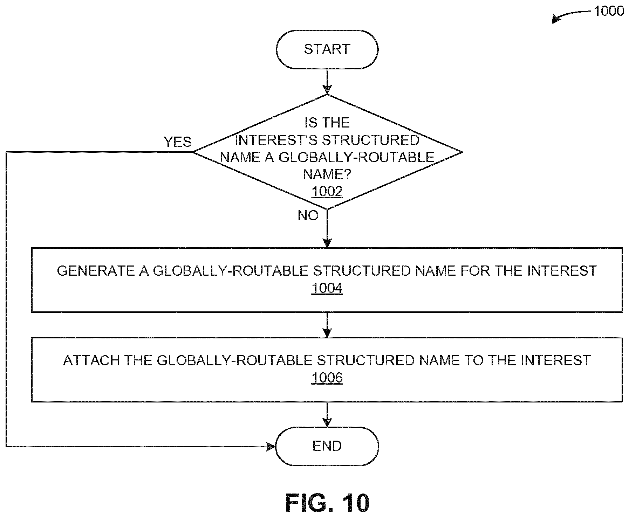

FIG. 10 presents a flow chart illustrating a method 1000 for generating a globally routable name for an interest in accordance with an embodiment. During operation, the system selects an interest that is to be propagated to a remote autonomous system (operation 1002). The system then determines whether the interest's structured name is a globally routable name (operation 1004). If the interest's name is not globally routable, the system generates a globally routable structured name for the interest (operation 1006). For example, if the system determines that the name prefix "/marc/" is not a globally-routable prefix, the system can generate a 32-bit label that facilitates achieving label switching.

The system then attaches the globally routable structured name to the interest (operation 1008). For example, the system can attach the globally routable structured name by prepending this label to the name prefix to form:
"/[32-bit label]/marc"

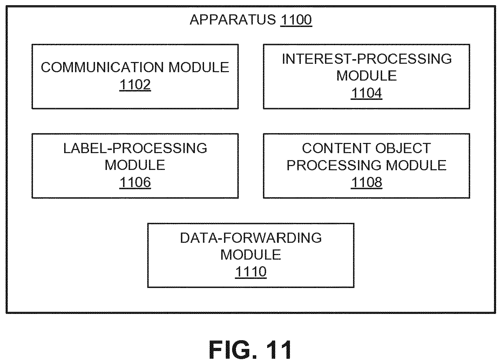

FIG. 11 illustrates an exemplary apparatus 1100 that facilitates distributing various interest-processing tasks across a plurality of computing devices of an autonomous system in accordance with an embodiment. Apparatus 1100 can comprise a plurality of modules which may communicate with one another via a wired or wireless communication channel. Apparatus 1100 may be realized using one or more integrated circuits, and may include fewer or more modules than those shown in FIG. 11. Further, apparatus 1100 may be integrated in a computer system, or realized as a separate device which is capable of communicating with other computer systems and/or devices. Specifically, apparatus 1100 can comprise a communication module 1102, an interest-processing module 1104, a label-processing module 1106, a content object processing module 1108, and a data-forwarding module 1110.

In some embodiments, communication module 1102 can receive interests and content objects from a remote CCN system. Interest-processing module 1104 can obtain an interest for a content object, and label-processing module 1106 can determine a label that corresponds to the interest. Communication module 1102 can forward the interest based on the label.

Further, communication module 1102 can receive a content object, and content object processing module 1108 can determine a label for an interest satisfied by the content object. Data-forwarding module 1110 can forward the content object to a CCN face from which the interest was received, based on the label.

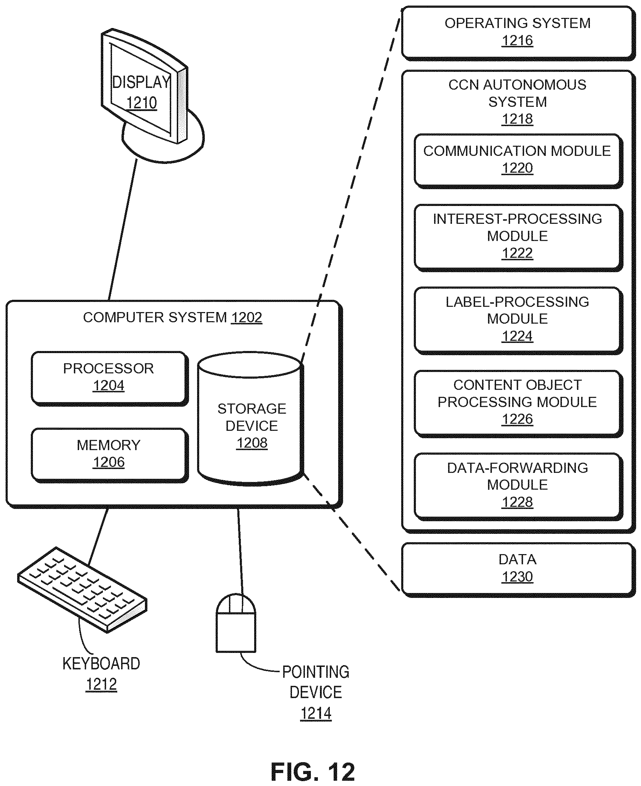

FIG. 12 illustrates an exemplary computer system 1202 that facilitates distributing various interest-processing tasks across a plurality of computing devices of an autonomous system in accordance with an embodiment. Computer system 1202 includes a processor 1204, a memory 1206, and a storage device 1208. Memory 1206 can include a volatile memory (e.g., RAM) that serves as a managed memory, and can be used to store one or more memory pools. Furthermore, computer system 1202 can be coupled to a display device 1210, a keyboard 1212, and a pointing device 1214. Storage device 1208 can store operating system 1216, a CCN autonomous system 1218, and data 1230.

CCN AS 1218 can include instructions, which when executed by computer system 1202, can cause computer system 1202 to perform methods and/or processes described in this disclosure. Specifically, AS 1218 may include instructions for receiving interests and content objects from a remote CCN system (communication module 1220). Further, AS 1218 can include instructions for obtaining an interest for a content object (interest-processing module 1222), and can include instructions for determining a label that corresponds to the interest (label-processing module 1224).

AS 1218 can also receive a content object, and AS 1218 can include instructions for determining a label for an interest satisfied by the content object (content object processing module 1226). AS 1218 can also include instructions for forwarding the content object to a CCN face from which the interest was received, based on the label (data forwarding module 1228).

Data 1232 can include any data that is required as input or that is generated as output by the methods and/or processes described in this disclosure. Specifically, data 1232 can store at least a PIT, a FIB, and/or a content store.

The data structures and code described in this detailed description are typically stored on a computer-readable storage medium, which may be any device or medium that can store code and/or data for use by a computer system. The computer-readable storage medium includes, but is not limited to, volatile memory, non-volatile memory, magnetic and optical storage devices such as disk drives, magnetic tape, CDs (compact discs), DVDs (digital versatile discs or digital video discs), or other media capable of storing computer-readable media now known or later developed.

The methods and processes described in the detailed description section can be embodied as code and/or data, which can be stored in a computer-readable storage medium as described above. When a computer system reads and executes the code and/or data stored on the computer-readable storage medium, the computer system performs the methods and processes embodied as data structures and code and stored within the computer-readable storage medium.

Furthermore, the methods and processes described above can be included in hardware modules. For example, the hardware modules can include, but are not limited to, application-specific integrated circuit (ASIC) chips, field-programmable gate arrays (FPGAs), and other programmable-logic devices now known or later developed. When the hardware modules are activated, the hardware modules perform the methods and processes included within the hardware modules.

The foregoing descriptions of embodiments of the present invention have been presented for purposes of illustration and description only. They are not intended to be exhaustive or to limit the present invention to the forms disclosed. Accordingly, many modifications and variations will be apparent to practitioners skilled in the art. Additionally, the above disclosure is not intended to limit the present invention. The scope of the present invention is defined by the appended claims.

## Claims

1. A computer-implemented method (300) for processing an interest (222) at a network node (122) of a content-centric network autonomous system, comprising:
receiving (302), by the network node, an interest (222) for a content object (234), said interest having a structured name;
responsive to determining (304) that the local network node does not satisfy the interest, determining (308) a label indicating network information for a remote network node;
attaching (310) the label to the interest; and
forwarding (312) the interest (224) to the remote network node based on the label, **characterized in that** determining the label involves performing (502) a lookup operation on a cache-server routing table (CSRT), using the interest's structured name, to obtain a label for a cache server assigned to the interest's structured name.

2. The method of claim 1, wherein the label includes a multiprotocol label switching (MPLS) label which indicates a virtual link to the remote network node.

3. The method of claim 1, wherein the network node (122) corresponds to an edge server (102.1) of the autonomous system, and wherein the method further comprises:
performing (402) a lookup in a pending interest table (PIT) to determine whether an entry exists in the PIT for the interest (222); and
responsive to determining (404) that an entry does not exist in the PIT for the interest, adding (410) an entry in the PIT that maps a prefix of the received interest to at least one label obtained from the received interest.

4. The method of claim 3, further comprising:
responsive to receiving (602) the content object (234), performing (604) a lookup in the PIT, based on the content object's structured name, to obtain (610) one or more labels for network nodes (112, 122) that are to receive the content object; and
forwarding (612) the content object to each network node identified by the obtained labels.

5. The method of claim 3, wherein performing (402) the lookup operation in the PIT involves performing a longest-matching prefix lookup between a structured name of the received interest (222) and a name prefix of a PIT entry to identify a PIT entry with a longest matching prefix to the interest's structured name.

6. The method of claim 1, wherein performing (502) the lookup operation in the CSRT involves performing a longest-matching prefix lookup between the interest's structured name and a name prefix of a CSRT entry to identify a CSRT entry with a longest matching prefix to the interest's structured name.

7. The method of claim 1, wherein the local network node (112) corresponds to an egress edge server (210) of the autonomous system, wherein determining (308) the label involves obtaining the label from the interest, and wherein the label indicates a virtual port of the egress edge server for forwarding the interest to a remote autonomous system.

8. The method of claim 1, wherein the network node (112) corresponds to a cache server (212), and wherein the method further comprises:
determining (804) that the cache server does not store the content object;
and
performing (904) a lookup operation on a route-server routing table (RSRT) to obtain the label, which corresponds to a route server (208) assigned to the interest's structured name.

9. The method of claim 8, wherein performing (904) the lookup operation in the RSRT involves performing (710) a longest-matching prefix lookup between the interest's structured name and a name prefix of a RSRT entry to identify a RSRT entry with a longest matching prefix to the interest's structured name.

## Patentansprüche

1. Computerimplementiertes Verfahren (300) zum Verarbeiten eines Interests (222) an einem Netzknoten (122) eines inhalts-zentrierten autonomen Netzwerksystems, das umfasst:
Empfangen (302) eines Interests (222) für ein Inhalts-Objekt (234) durch den Netzknoten, wobei das Interest einen strukturierten Namen hat;
Bestimmen (308) eines Labels, dass Netzwerk-Informationen für einen Remote-Netzknoten anzeigt, in Reaktion auf Bestimmung (304) dahingehend, dass der Local-Netzknoten das Interest nicht erfüllt;
Anhängen (310) des Labels an das Interest; und
Weiterleiten (312) des Interests (224) zu dem Remote-Netzknoten auf Basis des Labels, **dadurch gekennzeichnet, dass** Bestimmen des Labels einschließt, dass ein Suchvorgang (lookup operation) in einer Cache-Server-Routing-Table (CSRT) unter Verwendung eines strukturierten Namens des Interests durchgeführt wird (502), um ein Label für einen Cache-Server zu ermitteln, der dem strukturierten Namen des Interests zugewiesen ist.

2. Verfahren nach Anspruch 1, wobei das Label ein MPLS-Label (multiprotocol label switching label) einschließt, das einen virtuellen Link zu dem Remote-Netzknoten anzeigt.

3. Verfahren nach Anspruch 1, wobei der Netzknoten (122) einem Edge-Server (102.1) des autonomen Systems entspricht und das Verfahren des Weiteren umfasst:
Durchführen (402) einer Suche in einer Pending-Interest-Table (PIT), um zu bestimmen, ob ein Eintrag für das Interest (222) in der PIT vorhanden ist; und
Hinzufügen (410) eines Eintrags in der PIT, der dem wenigstens einen aus dem empfangenen Interest ermittelten Label ein Präfix des empfangenen Interest zuordnet, in Reaktion auf Bestimmung (404) dahingehend, dass kein Eintrag in der PIT für das Interest vorhanden ist.

4. Verfahren nach Anspruch 3, das des Weiteren umfasst:
Durchführen (604) einer Suche in der PIT auf Basis des strukturierten Namens des Inhalts-Objektes, um ein oder mehrere Label für Netzknoten (112, 122) zu ermitteln, die das Inhalts-Objekt empfangen sollen, in Reaktion auf Empfangen (602) des Inhalts-Objektes (234); und
Weiterleiten (612) des Inhalts-Objektes zu jedem durch die ermittelten Label identifizierten Netzknoten.

5. Verfahren nach Anspruch 3, wobei Durchführen (402) des Suchvorgangs in der PIT einschließt, dass eine Suche nach einem längsten übereinstimmenden Präfix (longest-matching prefix lookup) zwischen einem strukturierten Namen des empfangenen Interests (222) und einem Namens-Präfix eines PIT-Eintrages durchgeführt wird, um einen PET-Eintrag mit einem längsten übereinstimmenden Präfix mit dem strukturierten Namen des Interests zu identifizieren.

6. Verfahren nach Anspruch 1, wobei Durchführen (502) des Suchvorgangs in der CSRT einschließt, dass eine Suche nach einem längsten übereinstimmenden Präfix (longest-matching prefix lookup) zwischen dem strukturierten Namen des empfangenen Interests (222) und einem Namens-Präfix eines CSRT-Eintrages durchgeführt wird, um einen CSRT-Eintrag mit einem längsten übereinstimmenden Präfix mit dem strukturierten Namen des Interests zu identifizieren.

7. Verfahren nach Anspruch 1, wobei der Local-Netzknoten einem Ausgangs-Edge-Server (210) des autonomen Systems entspricht und Bestimmen (308) des Labels einschließt, dass das Label aus dem Interest ermittelt wird, und das Label einen virtuellen Port des Ausgangs-Edge-Servers zum Weiterleiten des Interests zu einem autonomen Remote-System anzeigt.

8. Verfahren nach Anspruch 1, wobei der Netzknoten (112) einem Cache-Server (212) entspricht und das Verfahren des Weiteren umfasst:
Bestimmen (804), dass der Cache-Server das Inhalts-Objekt nicht speichert; und
Durchführen (904) eines Suchvorgangs in einer Route-Server-Routing-Tabelle (RSRT) zum Ermitteln des Labels, das einem Route-Server (208) entspricht, der dem strukturierten Namen des Interests zugewiesen ist.

9. Verfahren nach Anspruch 8, wobei Durchführen (904) des Suchvorgangs in der RSRT einschließt, dass eine Suche nach einem längsten übereinstimmenden Präfix (longest-matching prefix lookup) zwischen dem strukturierten Namen des empfangenen Interests und einem Namens-Präfix eines RSRT-Eintrages durchgeführt wird (710), um einen RSRT-Eintrag mit einem längsten übereinstimmenden Präfix mit dem strukturierten Namen des Interests zu identifizieren.

## Revendications

1. Procédé mis en oeuvre par ordinateur (300) pour traiter un intérêt (222) au niveau d'un noeud de réseau (122) d'un système autonome de réseau centré sur le contenu, comprenant :
la réception (302), par le noeud de réseau, d'un intérêt (222) pour un objet de contenu (234), ledit intérêt ayant un nom structuré ;
en réponse à la détermination (304) que le noeud de réseau local ne satisfait pas à l'intérêt, la détermination (308) d'une étiquette indiquant des informations de réseau pour un noeud de réseau distant ;
le rattachement (310) de l'étiquette à l'intérêt ; et
le transfert (312) de l'intérêt (224) au noeud de réseau distant sur la base de l'étiquette, **caractérisé en ce que** la détermination de l'étiquette implique l'exécution (502) d'une opération de recherche sur une table de routage de serveur cache (CSRT), en utilisant le nom structuré de l'intérêt, pour obtenir une étiquette pour un serveur caché assigné au nom structuré de l'intérêt.

2. Procédé selon la revendication 1, dans lequel l'étiquette inclut une étiquette de commutation multiprotocole par étiquette (MPLS) qui indique une liaison virtuelle au noeud de réseau distant.

3. Procédé selon la revendication 1, dans lequel le noeud de réseau (122) correspond à un serveur périphérique (102.1) du système autonome, et dans lequel le procédé comprend en outre :
l'exécution (402) d'une recherche dans une table d'intérêt en attente (PIT) pour déterminer si une entrée existe dans la PIT pour l'intérêt (222) ; et
en réponse à la détermination (404) qu'une entrée n'existe pas dans la PIT pour l'intérêt, l'ajout (410) d'une entrée dans la PIT qui mappe un préfixe de l'intérêt reçu à au moins une étiquette obtenue à partir de l'intérêt reçu.

4. Procédé selon la revendication 3, comprenant en outre :
en réponse à la réception (602) de l'objet de contenu (234), l'exécution (604) d'une recherche dans la PIT, sur la base du nom structuré de l'objet de contenu, pour obtenir (610) une ou plusieurs étiquettes pour des noeuds de réseau (112, 122) qui doivent recevoir l'objet de contenu ; et
le transfert (612) de l'objet de contenu à chaque noeud de réseau identifié par les étiquettes obtenues.

5. Procédé selon la revendication 3, dans lequel l'exécution (402) de l'opération de recherche dans la PIT implique l'exécution d'une recherche de préfixe à concordance la plus longue entre un nom structuré de l'intérêt reçu (222) et un préfixe de nom d'une entrée PIT pour identifier une entrée PIT avec un préfixe à concordance la plus longue au nom structuré de l'intérêt.

6. Procédé selon la revendication 1, dans lequel l'exécution (502) de l'opération de recherche dans la CSRT implique l'exécution d'une recherche de préfixe à concordance la plus longue entre le nom structuré de l'intérêt et un préfixe de nom d'une entrée CSRT pour identifier une entrée CSRT avec un préfixe à concordance la plus longue au nom structuré de l'intérêt.

7. Procédé selon la revendication 1, dans lequel le noeud de réseau local (112) correspond à un serveur périphérique de sortie (210) du système autonome, dans lequel la détermination (308) de l'étiquette implique l'obtention de l'étiquette à partir de l'intérêt, et dans lequel l'étiquette indique un port virtuel du serveur périphérique de sortie pour transférer l'intérêt à un système autonome distant.

8. Procédé selon la revendication 1, dans lequel le noeud de réseau (112) correspond à un serveur cache (212), et dans lequel le procédé comprend en outre :
la détermination (804) que le serveur cache ne stocke pas l'objet de contenu ; et
l'exécution (904) d'une opération de recherche sur une table de routage de serveur de route (RSRT) pour obtenir l'étiquette, qui correspond à un serveur de route (208) assigné au nom structuré de l'intérêt.

9. Procédé selon la revendication 8, dans lequel l'exécution (904) de l'opération de recherche dans la RSRT implique l'exécution (710) d'une recherche de préfixe à concordance la plus longue entre le nom structuré de l'intérêt et un préfixe du nom d'une entrée RSRT pour identifier une entrée RSRT avec un préfixe à concordance la plus longue au nom structuré de l'intérêt.
